(19) Europäisches Patentamt
European Patent Office
Office européen des brevets

(11) **EP 3 803 444 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **19716077.3**

(22) Anmeldetag: **14.03.2019**

(51) Internationale Patentklassifikation (IPC):
**G01S 13/931** *(2020.01)* **G01S 13/87** *(2006.01)*
**G01S 7/02** *(2006.01)* **G01S 13/00** *(2006.01)*
**G01S 13/34** *(2006.01)*

(52) Gemeinsame Patentklassifikation (CPC):
**G01S 13/343; G01S 7/023; G01S 7/0232; G01S 7/0235; G01S 13/003; G01S 13/878; G01S 13/931;** G01S 2013/93271; G01S 2013/93272

(86) Internationale Anmeldenummer:
**PCT/EP2019/056387**

(87) Internationale Veröffentlichungsnummer:
**WO 2019/233645 (12.12.2019 Gazette 2019/50)**

(54) **RADARSENSORSYSTEM**

RADAR SENSOR SYSTEM

SYSTÈME À CAPTEURS RADARS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2018 DE 102018208992**

(43) Veröffentlichungstag der Anmeldung:
**14.04.2021 Patentblatt 2021/15**

(73) Patentinhaber: **Robert Bosch GmbH**
**70442 Stuttgart (DE)**

(72) Erfinder:
• **KLAR, Michael**
**71106 Magstadt (DE)**
• **SCHOOR, Michael**
**70195 Stuttgart (DE)**

(56) Entgegenhaltungen:
**DE-A1- 102015 218 542    US-A1- 2018 113 206**

# EP 3 803 444 B1

**Beschreibung**

Die Erfindung betrifft ein Radarsensorsystem.

Stand der Technik

Bei Fahrzeuge mit einem hohem Level an Fahrerassistenzfunktionen oder automatisierten Fahrfunktion werden immer mehr Radarsensoren verbaut. Durch eine höhere Anzahl an Radarsensoren wird eine höhere Leistungsfähigkeit der automatisierten oder teilautomatisierten Fahrfunktionen gegenüber einzelnen Radarsensoren angestrebt. Bisherige Lösungen in diesem Bereich bestehen aus Radarsensoren, welche sensorintern umfangreiche Datenverarbeitung der empfangenen Radarwellen durchführen. Somit können die Radarsensoren Daten auf Objekt- oder Ortungsebene für eine weitere Auswertung durch das Fahrzeug liefern. Hierdurch kann die an das Fahrzeug übertragene Datenmenge reduziert werden, jedoch müssen die jeweiligen Radarsensoren eine höhere Rechenleistung und einen größeren Speicher aufweisen.

Insbesondere die Parkfunktionen leiden jedoch unter Eigenschaften der Wellenausbreitung, wobei zum Beispiel Wände stark reflektieren und dadurch schwächer reflektierende Objekte, wie z.B. Pfosten maskiert werden.

Bistatische Auswertungen im Zusammenhang mit Ultraschall sind bekannt. Dabei werden Laufzeitunterschiede von akustischen und elektrischen Signalen ausgewertet.

DE 10 2014 212 280 A1 offenbart ein Verfahren zur Bestimmung einer Relativgeschwindigkeit eines Radarziels, bei dem eine FMCW-Radarmessung mit einem Sendesignal ausgeführt wird, dessen Modulationsmuster zeitlich ineinander verschachtelte Sequenzen umfasst (JSFMCW-Modulationsverfahren).

DE 10 2014 212 284 A1 offenbart einen MIMO-FMCW-Radarsensor und ein MIMO-Zeitmultiplex-Verfahren zur Ortung eines Radarziels, bei dem eine FMCW-Radarmessung mit einem Sendesignal ausgeführt wird, dessen Modulationsmuster für unterschiedliche Sende-Schaltzustände, die sich in der Auswahl der zum Senden verwendeten Antennenelemente unterscheiden, zeitlich ineinander verschachtelte Sequenzen von Rampen umfasst.

Die Offenlegungsschrift US 2018/0113206 A1 offenbart ein Radarsystem.

Die Offenlegungsschrift DE 10 2015 218 542 A1 offenbart einen Radarsensor.

Offenbarung der Erfindung

Die der Erfindung zugrunde liegende Aufgabe kann darin gesehen werden, ein verbessertes Radarsensorsystem bereitzustellen, welches eine verbesserte Objektklassifizierung unterstützt.

Diese Aufgabe wird mittels des Gegenstands der-des unabhängigen Anspruchs gelöst. Vorteilhafte Ausgestaltungen der Erfindung sind Gegenstand von abhängigen Unteransprüchen.

Gemäß einem ersten Aspekt wird die Aufgabe gelöst mit einem Radarsensorsystem mit den Merkmalen des Anspruchs 1, aufweisend:

- wenigstens zwei Radarsensoren mit jeweils wenigstens einem Sender und wenigstens einem Empfänger, wobei sich Detektionsbereiche der beiden Radarsensoren wenigstens teilweise überlappen, wobei die beiden Radarsensoren definiert beabstandet sind, wobei Sendesignale der beiden Radarsensoren derart synchronisierbar sind, dass mittels einer Auswertungseinrichtung von einem Objekt reflektierte Strahlung eines Radarsensors auswertbar ist, die vom jeweils anderen Radarsensor ausgesendet wurde.

Auf diese Weise können mit dem vorgeschlagenen Radarsensorsystem Objekte verbessert klassifiziert werden. Besonders nützlich ist das vorgeschlagene Radarsensorsystem für Anwendungen im Nahbereich, zum Beispiel für Parkanwendungen von Kraftfahrzeugen. Dabei wird die Tatsache ausgenutzt, dass Objekte aus einer ersten Richtung angestrahlt, wobei aus einer anderen Richtung Signale empfangen werden, die ausgewertet und klassifiziert werden.

Gemäß einem zweiten Aspekt, welcher nicht Teil der Erfindung ist, wird die Aufgabe gelöst mit einem Verfahren zum Herstellen eines Radarsensorsystems, aufweisend die Schritte:

- Bereitstellen von wenigstens zwei Radarsensoren, wobei sich Detektionsbereiche der beiden Radarsensoren wenigstens teilweise überlappen, wobei die beiden Sensoren definiert beabstandet angeordnet werden, wobei Sendesignale der beiden Radarsensoren derart synchronisierbar sind, dass mittels einer Auswertungseinrichtung von einem Objekt reflektierte Strahlung eines Radarsensors auswertbar ist, die vom jeweils anderen Radarsensor ausgesendet wurde.

Gemäß einem dritten Aspekt, welcher nicht Teil der Erfindung ist, wird die Aufgabe gelöst mit einem Verfahren zum Betreiben eines Radarsensorsystems

- wobei ein Frequenzversatz (Δf) zwischen den beiden Radarsensoren dadurch bestimmt und kompensiert werden kann, dass die Sender der Radarsensoren abwechselnd senden, wobei gleichzeitig die Empfänger der nicht sendenden Radarsensoren empfangen, wobei
- Sendesignale der beiden Radarsensoren derart synchronisiert werden, dass mittels einer Auswertungseinrichtung von einem Objekt reflektierte Strahlung eines Radarsensors ausgewertet wird, die vom jeweils anderen Radarsensor ausgesendet wurde.

Eine bevorzugte Ausführungsform des Radarsensorsystems, welche nicht Teil der Erfindung ist, zeichnet sich dadurch aus, dass die wenigstens zwei Radarsensoren im Wesentlichen zur gleichen Zeit senden, im Wesentlichen auf der gleichen Frequenz senden und im Wesentlichen gleiche Modulationsparameter aufweisen. Auf diese Weise ist eine gute Synchronisation der Sendesignale unterstützt, wodurch eine genaue bistatische Auswertung ermöglicht ist.

Eine weitere bevorzugte Ausführungsform des Radarsensorsystems zeichnet sich dadurch aus, dass mittels der wenigstens zwei Radarsensoren FMCW-Rampen sendbar sind, die im Wesentlichen gleiche Modulationsparameter aufweisen. Auch auf diese Weise ist eine gute Synchronisation der Sendesignale der Radarsensoren unterstützt.

Das erfindungsgemäße Radarsensorsystem zeichnet sich dadurch aus, dass ein Frequenzversatz zwischen den beiden Radarsensoren dadurch bestimmbar und kompensierbar ist, dass die Sender der Radarsensoren abwechselnd senden, wobei gleichzeitig die Empfänger der nicht sendenden Radarsensoren empfangen. Vorteilhaft kann auf diese Weise der Frequenzversatz zwischen den beiden Radarsensoren dadurch korrigiert werden, dass die Radarsensoren jeweils abwechselnd als Sender und Empfänger fungieren.

Das erfindungsgemäße Radarsensorsystem zeichnet sich dadurch aus, dass der Frequenzversatz zwischen den beiden Radarsensoren dadurch bestimmbar und kompensierbar ist, dass bei einem Zielobjekt zwei Basisbandfrequenzen für zwei Unbekannte gemessen werden und dass bei N Zielobjekten 2N Basisbandfrequenzen für N+1 Unbekannte gemessen werden. Vorteilhaft kann auf diese Weise der Frequenzversatz zwischen den Radarsensoren umso genauer bestimmt werden, je höher die Anzahl der Ziele ist.

Eine weitere bevorzugte Ausführungsform des Radarsensorsystems zeichnet sich dadurch aus, dass zur Synchronisation der FMCW-Rampen ein Frequenzversatz zwischen den beiden Radarsensoren bestimmbar und kompensierbar ist. Dadurch ist eine weitere Optimierung der Synchronisation der Sendesignale der Radarsensoren unterstützt.

Eine weitere bevorzugte Ausführungsform des Radarsensorsystems zeichnet sich dadurch aus, dass mittels der beiden Radarsensoren zeitlich ineinander verschachtelte FMCW-Rampen sendbar sind. Dadurch ist ein guter Anwendungsfall für die Anwendung des Verfahrens für das JSFMCW-Modulationsverfahren bereitgestellt.

Das erfindungsgemäße Radarsensorsystem ist dadurch gekennzeichnet, dass mittels der Auswertungseinrichtung ein bistatischer und ein monostatischer Radarquerschnitt des Objekts ermittelbar ist. Abhängig von Einfalls- und Ausfallswinkel kann auf diese Weise eine gute Objekterkennung und Klassifizierung vorgenommen werden.

Eine weitere bevorzugte Ausführungsform des Radarsensorsystems ist dadurch gekennzeichnet, dass für das Synchronisieren der Sendesignale der Radarsensoren Signalleistungen der Sendesignale definiert berücksichtigbar sind. Auf diese Weise kann vorteilhaft eine Optimierung der Synchronisation der Sendesignale der Radarsensoren vorgenommen werden.

Im Folgenden werden anhand von stark vereinfachten schematischen Darstellungen bevorzugte Ausführungsbeispiele der Erfindung näher erläutert.

Dabei zeigt:

Fig. 1    eine schematische Darstellung eines vorgeschlagenen Radarsensorsystems; und

Fig. 2    eine schematische Darstellung eines Verfahrens zum Herstellen eines Radarsensorsystems, wobei das Verfahren zum Herstellen eines Radarsensorsystems nicht Teil der Erfindung ist.

Im Folgenden wird unter einer "bistatischen Auswertung" verstanden, dass Signale eines Systems aus Sender und Empfänger ausgewertet werden, wobei Sender und Empfänger nicht am selben Ort, sondern voneinander beabstandet angeordnet sind.

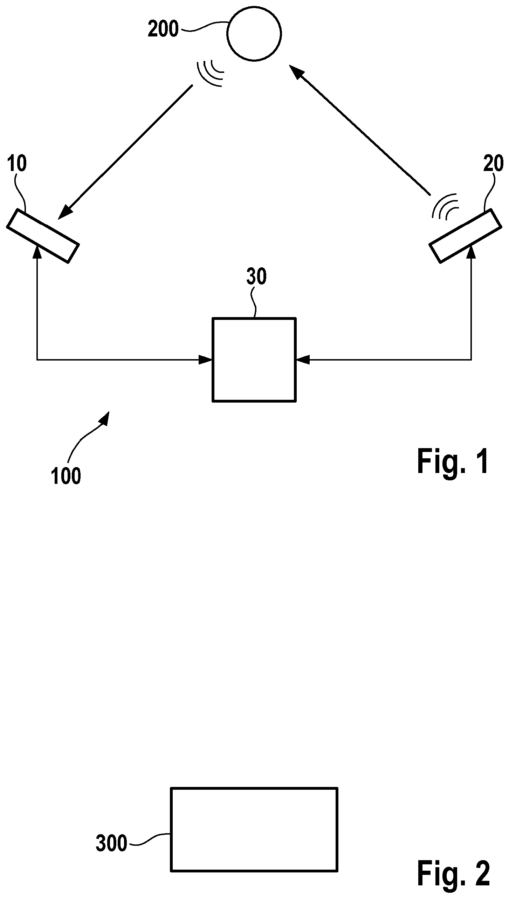

Fig. 1 zeigt eine schematische Darstellung eines vorgeschlagenen Radarsensorsystems 100. Erkennbar ist ein erster Radarsensor 10, und ein zweiter, vom ersten Radarsensoren 10 beabstandeter Radarsensor 20, die mit einer Auswertungseinrichtung 30 funktional verbunden sind. Vorgeschlagen ist auf diese Weise ein Verbund von Radarsensoren 10, 20, wobei ein Radarsensor 10, 20 Radarwellen auswerten kann, die vom jeweils anderen Radarsensor 10, 20 ausgesendet und von einem Objekt 200 reflektiert wurden. In der Fig. 1 ist angedeutet, dass ein vom zweiten Radarsensor 20 ausgesendetes Sendesignal am Objekt 200 reflektiert wird, wobei das reflektierte Signal vom ersten Radarsensor 10 empfangen wird. Die Anzahl zwei der Radarsensoren 10, 20 ist lediglich beispielhaft, das Radarsensorsystem 100 kann auch mehr als zwei Radarsensoren 10, 20 umfassen.

Durch die genannte Auswertung der von einem anderen Radarsensor emittierten Strahlung wird eine Ermittlung sowohl des monostatischen als auch des bistatischen Rückstreuquerschnitts (engl. Radar Cross Section, RCS) des Objekts 200 ermöglicht, welche die ein Maß für eine Reflektivität des Objekts 200 darstellt und damit eine bessere Erkennung/Detektion und Klassifikation von Objekten, insbesondere für Parkanwendungen in einem Kraftfahrzeug ermöglicht. Dabei kann aufgrund der Nähe der Objekte 200 eine große Winkeldifferenz zu den Radarsensoren 10, 20 erreicht werden.

Dies wird ermöglicht, indem eine bistatische Auswertung vorgenommen wird, der mit dem vorgeschlagenen Ansatz vorteilhaft ohne signifikante Mehraufwendungen möglich ist.

Um eine bistatische Auswertung zu ermöglichen, sind zwei oder mehrere Radarsensoren 10, 20 mit Sendern und Empfängern notwendig, wobei sich die Sicht- bzw. Detektionsbereiche wenigstens teilweise überlappen müssen. Des Weiteren müssen die Radarsensoren 10, 20 des Radarsensorsystems 100 bis zu einem gewissen Grad synchronisiert sein, damit ein Empfänger die Wellen eines anderen "Fremdsenders" sinnvoll auswerten kann.

Die Synchronisation basiert erfindungsgemäß im Wesentlichen auf einer Synchronisation der Referenzoszillatoren (nicht dargestellt) der Radarsensoren 10, 20. Jeder Radarsensor 10, 20 weist erfindungsgemäß einen Quarzoszillator auf, wobei über eine Kommunikationsschnittstelle (erfindungsgemäß Ethernet, nicht dargestellt) regelmäßig über Zeitstempel die Abweichung von einer Referenzfrequenz bestimmt wird. Ethernet hat dabei den Vorteil, dass es mit PTP (engl. Precision Time Protocol) einen entsprechenden Standard gibt, der mit Hardwareunterstützung eine Zeitsynchronisation im Bereich von 10ns ermöglicht.

Auf diese Weise ist es erfindungsgemäß möglich, den Empfang eines Radarsensors 10, 20 zeitlich mit dem Senden des anderen Radarsensors 10, 20 zu synchronisieren, sodass ein Sendesignal des anderen Radarsensors 10, 20 auch empfangen wird. Beispielsweise ergibt sich bei Verwendung von FMCW-Rampen als Sendesignale bei einer Steigung von 5 MHz/μs ein Frequenzversatz von 50 kHz, was gut innerhalb des Basisbandes von typischerweise ca. 5 MHz liegt. Dieser Frequenzversatz stellt einen Frequenzfehler dar, der in einem Entfernungsfehler resultiert, weshalb angestrebt wird, den Frequenzfehler möglichst gering zu halten.

Über die Synchronisation der Sendesignale der beiden Radarsensoren 10, 20 ist es möglich, die Mittenfrequenz und die Steigung der jeweils lokal erzeugten Oszillatorfrequenz zu synchronisieren. Wird eine Genauigkeit von 1 ppm erzielt, so bedeutet dies im Ergebnis einen Frequenzversatz von ca. 76 kHz. In Summe ist der Frequenzversatz immer noch gut innerhalb der Basisbandbreite, damit ist die Hauptanforderung an die Synchronisation erfüllt, wodurch der Fehler klein genug ist, damit die bistatischen Signale nicht den Auswertebereich verlassen. Angestrebt wird, den Synchronisationsfehler so gering wie möglich zu halten, um dadurch die Entfernungsschätzung zu optimieren.

Der auftretende Frequenzversatz muss zu diesem Zweck kompensiert werden, da dies die Entfernungsschätzung verfälschten kann. Für die Basisbandfrequenz $f_{bb}$ gilt:

$$f_{bb} = f_{TX}(t - \tau - T_{TX-RX}) - f_{RX}(t) \qquad (1)$$

mit :

$\tau$      Signallaufzeit

$T_{TX-RX}$    Zeitversatz zwischen Sender und Empfänger (positiv, falls der Sender vor dem Empfänger startet)

$$\tau = \frac{d_{TX,RX}}{c} \qquad (2)$$

$d_{TX,RX}$    Gesamtweg von Sender zu Empfänger

$c$      Ausbreitungsgeschwindigkeit

$$f_{TX}(t) = f_{s,TX} + s \cdot t$$
$$f_{RX}(t) = f_{s,RX} + s \cdot t \qquad (3)$$

$s$      Rampensteigung der FMCW-Rampen

$f_s$      Startfrequenz

$t$      Zeit

Eingesetzt ergibt dies:

$$f_{bb} = f_{TX}(t - \tau - T_{TX-RX}) - f_{RX}(t)$$

$$= f_{s,TX} + s \cdot (t - \tau - T_{TX-RX}) - f_{s,RX} - s \cdot t$$

$$= (f_{s,TX} - f_{s,RX}) - s \cdot (\tau + T_{TX-RX})$$

$$= \frac{-s}{c} \cdot d_{TX,RX} + (f_{s,TX} - f_{s,RX}) - s \cdot T_{TX-RX} = \frac{-s}{c} \cdot d_{TX,RX} + \Delta f \qquad (4)$$

$\Delta f$          Frequenzversatz

$f_{s,TX} - f_{s,RX}$    Differenz der Startfrequenzen

Die empfangene Basisbandfrequenz ist auch vom Versatz der Oszillatorfrequenzen und dem Zeitfehler abhängig.

Die Gleichungen (1) bis (4) spezifizieren somit, dass die Basisbandfrequenz $f_{bb}$ von den Rampensignalen und den Laufzeiten abhängt und auch noch der Frequenzversatz $\Delta f$ berücksichtigt werden muss.

Dieser Fehler in Form des Frequenzversatzes $\Delta f$ wird korrigiert, indem Sender und Empfänger durchgewechselt werden, d.h. dass der Sender abwechselnd dem ersten Radarsensor 10 und dem zweiten Radarsensor 20 zugeordnet ist, wodurch die beiden Radarsensoren 10, 20 abwechselnd als Sender fungieren. Dieses Durchwechseln von Sender und Empfänger lässt sich gut mit dem oben erwähnten, bekannten JSFMCW-Modulationsverfahren kombinieren, bei dem in einer Verschachtelung im Zeitmultiplex nicht nur Sender des eigenen Radarsensors, sondern auch Sender von Fremd-Radarsensoren eine Rampe belegen.

Bei einem Szenario eines Radarsensorsystems 100 mit zwei Radarsensoren 10, 20 muss die obige allgemein gehaltene Gleichung (4) in folgender Weise modifiziert werden:

$$f_{bb,12} = \frac{-s}{c} \cdot d_{TX,RX} + (f_{s,1} - f_{s,2}) - s \cdot T_{1-2} = \frac{-s}{c} \cdot d_{TX,RX} + \Delta f$$

$$f_{bb,21} = \frac{-s}{c} \cdot d_{TX,RX} + (f_{s,2} - f_{s,1}) - s \cdot T_{2-1} = \frac{-s}{c} \cdot d_{TX,RX} - \Delta f \qquad (5)$$

$f_{bb,12}$    Basisbandfrequenz: Sensor 1 sendet, Sensor 2 empfängt

$f_{bb2,1}$    Basisbandfrequenz: Sensor 2 sendet, Sensor 1 empfängt

$f_{s,1}$      Startfrequenz Sensor 1

$f_{s,2}$      Startfrequenz Sensor 2

$T_{1-2}$     Zeitversatz zwischen Sensor 1 und Sensor 2, wobei Sensor 1 sendet

wobei aufgrund der Symmetrie gilt:

$$(f_{s,1} - f_{s,2}) = -(f_{s,2} - f_{s,1})$$

$$T_{1-2} = -T_{2-1} \qquad (6)$$

$T_{2-1}$ 3    Zeitversatz zwischen Sensor 2 und Sensor 1, wobei Sensor 2 sendet

In der bistatischen Auswertung verschieben sich somit alle Basisbandfrequenzen um den Offset, dessen Vorzeichen sich bei umgekehrter Wellenausbreitung, d.h. wenn Sender und Empfänger vertauscht sind, umkehrt.

Bei einem Zielobjekt 200 werden somit zwei Basisbandfrequenzen für zwei Unbekannte gemessen, bei N Zielen sind dies 2N Basisbandfrequenzen für N +1 Unbekannte. Das heißt, dass einmal die wahre Frequenz und einmal der Frequenzversatz bzw. -fehler gemessen wird. Bei mehr Zielobjekten erhöht sich die Anzahl der Basisbandfrequenzen entsprechend, wobei aber die Anzahl der Unbekannten vorteilhaft nicht im gleichen Umfang zunimmt.

Dieses mathematische Problem ist grundsätzlich lösbar, wobei aufgrund der Verschiebung zur Lösung eine Art Korrelation oder kleinste-Quadrate-Ansatz bevorzugt wird.

Zur Optimierung des Rechenaufwands zur Lösung des mathematischen Problems ist es denkbar, Signalleistungen der Sendesignale einzubeziehen und z.B. nur Signale mit hoher bzw. ähnlicher Leistung zu verwenden, um den Offset zumindest grob zu bestimmen.

Mit den obengenannten Synchronisations-Maßnahmen wird erreicht, dass ein Empfänger Signale eines anderen Senders empfangen kann, wodurch eine bistatische Auswertung ermöglicht wird.

Vorteilhaft erfolgt ein abwechselndes Betreiben der Radarsensoren in zeitlich kurzen Abständen, weil dadurch Synchronisationsfehler in Form des Frequenzversatzes, der sich auch ändern kann, ausgeglichen wird. Beispielsweise ist dies dadurch möglich, dass sich ein Radarsensor etwas anders erhitzt als der andere Radarsensor und/oder dass die Radarsensoren unterschiedliche Driften aufweisen. Ferner kann auf diese Weise eine Berücksichtigung von sich ändernden Fahrsituationen realisiert werden, wodurch unterstützt ist, dass bei der bistatischen Auswertung Messungen der Radarsensoren eine Relevanz zueinander aufweisen.

Mittels der vorgeschlagenen bistatischen Auswertung ist es möglich, Objekte zu erkennen, die ohne das vorgeschlagene Verfahren nicht erkennbar sind. Ferner kann mit der vorgeschlagenen bistatischen Auswertung eine Klassifikation der erkannten Objekte verbessert sein.

Limitiert ist der vorgeschlagene Ansatz durch das Phasenrauschen, das bei zwei unabhängigen Oszillatoren der zwei Sensoren unkorreliert ist und daher hohe Rauschpegel verursachen kann. Für eine bistatische Auswertung ist daher insbesondere eine praktische Anwendung auf den Nahbereich (z.B. Parkanwendungen) vorgesehen, soweit keine Technologie mit geringem Phasenrauschen verfügbar ist.

Eine Verbesserung ergibt sich, wenn zusätzlich auch eine Referenzfrequenz über eine Kommunikationsschnittstelle (oder gesondert über einen Fahrzeugbus aufgrund der EMV-Schirmung) übertragen wird, so dass die Lokaloszillatoren und deren PLLs eine kohärente Referenz benutzen, damit das Phasenrauschen innerhalb der PLL-Schleifenbandbreite zumindest etwas korreliert ist, wodurch auch das Phasenrauschen in der bistatischen Auswertung für einen definierten Frequenzbereich zumindest geringfügig unterdrückt sein kann.

Das Radarsensorsystem 200 kann beispielsweise als ein FMCW-Radar, z.B. ein FMCW-Chirp-Sequence-Radar ausgebildet sein, kann jedoch auch mit anderen Modulationsarten betrieben werden.

Vorteilhaft kann das vorgeschlagene Radarsensorsystem 100 nicht nur mit Radar-Vollsensoren durchgeführt werde, sondern auch mit Radarsensorköpfen, wobei ein zentrales Steuergerät zur Verarbeitung der Signale der Radarsensorköpfe vorgesehen ist.

Denkbar ist das vorgeschlagene Konzept mit z.B. fünf Radarsensoren an einem Fahrzeug, wobei die Radarsensoren vorne links, vorne rechts und vorne mittig sowie hinten links und hinten rechts am Fahrzeug angeordnet sind. Dabei weisen die vorderen drei Radarsensoren teilweise überlappende Sichtbereiche auf. Gegebenenfalls können die genannten Radarsensoren zu einer Optimierung des vorgeschlagenen Verfahrens durch weitere Satellitensensoren ergänzt werden.

Vorteilhaft kann das vorgeschlagene Verfahren zum Betreiben eines Radarsensorsystems 100 als eine Software ausgebildet sein, welches auf dem Radarsensorsystem 100 abläuft. Eine leichte Adaptierbarkeit des Verfahrens ist auf diese Weise vorteilhaft unterstützt.

Fig. 2 zeigt einen prinzipiellen Ablauf eines Verfahrens zum Herstellen eines Radarsensorsystems 100, wobei das Verfahren zum Herstellen eines Radarsensorsystems 100 nicht Teil der Erfindung ist.

In einem Schritt 300 wird ein Bereitstellen von wenigstens zwei Radarsensoren 10, 20 durchgeführt, wobei sich Detektionsbereiche der beiden Radarsensoren 10, 20 wenigstens teilweise überlappen, wobei die beiden Radarsensoren 10, 20 definiert beabstandet angeordnet werden, wobei Sendesignale der beiden Radarsensoren 10, 20 derart synchronisierbar sind, dass mittels einer Auswertungseinrichtung 30 von einem Objekt 200 reflektierte Strahlung eines Radarsensors 10, 20 auswertbar ist, die vom jeweils anderen Radarsensor 10, 20 ausgesendet wurde.

Zusammenfassend ermöglicht das vorgeschlagene Radarsensorsystem eine bistatische Auswertung bei nur geringem Aufwand für die Synchronisation der Oszillatoren in den Sensoren. Damit ist es kostengünstig möglich, eine bistatische Auswertung durchführen. Beispielsweise ist es möglich, den vorgeschlagenen bistatischen Auswertungsbetrieb des Radarsensorsystems anwendungsspezifisch zu aktivieren.

**Patentansprüche**

**1.** Radarsensorsystem (100), aufweisend:

- wenigstens zwei Radarsensoren (10, 20) mit jeweils wenigstens einem Sender und wenigstens einem Empfänger, wobei sich Detektionsbereiche der beiden Radarsensoren (10, 20) wenigstens teilweise überlappen, wobei die beiden Radarsensoren (10, 20) definiert beabstandet sind, wobei Sendesignale der beiden Radarsensoren (10, 20) derart synchronisiert werden können, dass mittels einer Auswertungseinrichtung (30) von einem Objekt (200) reflektierte Strahlung eines Radarsensors (10, 20) ausgewertet werden kann, die vom jeweils anderen Radarsensor (10, 20) ausgesendet wurde, wobei die Synchronisation im Wesentlichen auf einer Synchronisation der Referenzoszillatoren der Radarsensoren (10, 20) basiert, wobei
- jeder Radarsensor (10, 20) einen Quarzoszillator aufweist, wobei über eine Ethernet-Kommunikationsschnittstelle regelmäßig über Zeitstempel die Abweichung von einer Referenzfrequenz bestimmt wird, sodass es möglich ist, den Empfang eines Radarsensors (10, 20) zeitlich mit dem Senden des anderen Radarsensors (10, 20) unter Verwendung des Precision Time Protocol zu synchronisieren, sodass ein Sendesignal des anderen Radarsensors (10, 20) auch empfangen wird,

- wobei mittels der Auswertungseinrichtung (30) ein bistatischer und ein monostatischer Radarquerschnitt des Objekts (200) ermittelt werden können,

- **dadurch gekennzeichnet, dass** ein Frequenzversatz ($\Delta f$) zwischen den beiden Radarsensoren (10, 20) dadurch bestimmt und kompensiert wird, dass die Sender der Radarsensoren (10, 20) abwechselnd senden, wobei gleichzeitig die Empfänger der nicht sendenden Radarsensoren (10, 20) empfangen, und

- der Frequenzversatz ($\Delta f$) zwischen den beiden Radarsensoren (10, 20) dadurch bestimmt und kompensiert wird, dass bei einem Zielobjekt (200) zwei Basisbandfrequenzen für zwei Unbekannte gemessen werden und dass bei N Zielobjekten 2N Basisbandfrequenzen für N+1 Unbekannte gemessen werden.

**2.** Radarsensorsystem (100) nach Anspruch 1, **dadurch gekennzeichnet, dass** mittels der wenigstens zwei Radarsensoren (10, 20) FMCW-Rampen gesendet werden, die im Wesentlichen gleiche Modulationsparameter aufweisen.

**3.** Radarsensorsystem (100) nach Anspruch 1 oder 2, **dadurch gekennzeichnet, dass** für das Synchronisieren der Sendesignale der Radarsensoren (10, 20) Signalleistungen der Sendesignale einbezogen werden und nur Signale mit hoher oder ähnlicher Leistung verwendet werden, um einen Offset zumindest grob zu bestimmen, wobei der Offset die Verschiebung der Basisbandfrequenzen der jeweils sendenden zwei Radarsensoren in der bistatischen Auswertung ist, dessen Vorzeichen sich bei umgekehrter Wellenausbreitung, wenn Sender und Empfänger vertauscht sind, umkehrt.

## Claims

**1.** Radar sensor system (100), comprising:

- at least two radar sensors (10, 20) that each have at least one transmitter and at least one receiver, detection areas of the two radar sensors (10, 20) at least partially overlapping, the two radar sensors (10, 20) being a defined distance apart, transmission signals of the two radar sensors (10, 20) being able to be synchronized in such a way that an evaluation device (30) can be used to evaluate radiation of one radar sensor (10, 20) that has been reflected by an object (200) and was emitted by the other radar sensor (10, 20), the synchronization being based substantially on a synchronization of the reference oscillators of the radar sensors (10, 20),

- each radar sensor (10, 20) having a crystal oscillator, an Ethernet communication interface being used to regularly determine by way of timestamps the deviation from a reference frequency so that it is possible to synchronize the timing of the reception of one radar sensor (10, 20) with that of the transmission of the other radar sensor (10, 20) using the Precision Time Protocol so that a transmission signal of the other radar sensor (10, 20) is also received,

- the evaluation device (30) being able to be used to determine a bistatic and a monostatic radar cross-section of the object (200),

- **characterized in that** a frequency offset ($\Delta f$) between the two radar sensors (10, 20) is determined and compensated for by virtue of the transmitters of the radar sensors (10, 20) alternately transmitting, with the receivers of the non-transmitting radar sensors (10, 20) simultaneously receiving, and

- the frequency offset ($\Delta f$) between the two radar sensors (10, 20) is determined and compensated for by measuring two baseband frequencies for two unknowns when there is one target object (200) and by measuring 2N baseband frequencies for N+1 unknowns when there are N target objects.

**2.** Radar sensor system (100) according to Claim 1, **characterized in that** the at least two radar sensors (10, 20) are used to transmit FMCW ramps that have substantially identical modulation parameters.

**3.** Radar sensor system (100) according to Claim 1 or 2, **characterized in that** the transmission signals of the radar sensors (10, 20) are synchronized by factoring in signal powers of the transmission signals and using only signals with high or similar power to at least roughly determine an offset, the offset being the shift in the baseband frequencies of the respective two transmitting radar sensors in the bistatic evaluation, the arithmetic sign of which offset reverses for inverse wave propagation when the transmitter and the receiver are interchanged.

**Revendications**

1. Système de capteurs radar (100), comprenant :

   - au moins deux capteurs radar (10, 20) comportant chacun au moins un émetteur et au moins un récepteur, dans lequel les zones de détection des deux capteurs radar (10, 20) se chevauchent au moins partiellement, dans lequel les deux capteurs radar (10, 20) sont espacés de manière définie, dans lequel des signaux d'émission des deux capteurs radar (10, 20) peuvent être synchronisés de telle sorte qu'un rayonnement réfléchi par un objet (200) d'un capteur radar (10, 20) qui a été émis par l'autre capteur radar (10, 20) puisse être évalué au moyen d'un dispositif d'évaluation (30), la synchronisation étant essentiellement basée sur une synchronisation des oscillateurs de référence des capteurs radar (10, 20), dans lequel
   - chaque capteur radar (10, 20) présente un oscillateur à quartz, l'écart par rapport à une fréquence de référence étant déterminé régulièrement par horodatage via une interface de communication Ethernet, de sorte qu'il est possible de synchroniser la réception d'un capteur radar (10, 20) dans le temps avec l'émission de l'autre capteur radar (10, 20) à l'aide du Precision Time Protocol, de sorte qu'un signal d'émission de l'autre capteur radar (10, 20) soit également reçu,
   - un dispositif d'évaluation (30) permettant de déterminer une aire radar bistatique et une aire radar monostatique de l'objet (200),
   - **caractérisé en ce qu'**un décalage de fréquence ($\Delta$f) entre les deux capteurs radar (10, 20) est déterminé et compensé par le fait que les émetteurs des capteurs radar (10, 20) émettent en alternance, les récepteurs des capteurs radar (10, 20) qui n'émettent pas recevant simultanément, et
   - le décalage de fréquence ($\Delta$f) entre les deux capteurs radar (10, 20) est déterminé et compensé par le fait que, pour un objet cible (200), deux fréquences de bande de base sont mesurées pour deux inconnues et que, pour N objets cibles, 2N fréquences de bande de base sont mesurées pour N+1 inconnues.

2. Système de capteurs radar (100) selon la revendication 1, **caractérisé en ce que** les au moins deux capteurs radar (10, 20) émettent des rampes FMCW qui présentent des paramètres de modulation essentiellement identiques.

3. Système de capteurs radar (100) selon la revendication 1 ou 2, **caractérisé en ce que**, pour synchroniser les signaux d'émission des capteurs radar (10, 20), les puissances des signaux d'émission sont prises en compte et seuls des signaux de puissance élevée ou similaire sont utilisés afin de déterminer au moins approximativement un décalage, le décalage étant le décalage des fréquences de bande de base des deux capteurs radar émettant respectivement dans l'évaluation bistatique, dont le signe s'inverse en cas de propagation inverse des ondes, lorsque l'émetteur et le récepteur sont intervertis.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014212280 A1
- DE 102014212284 A1
- US 20180113206 A1
- DE 102015218542 A1